# FASCICULE DE BREVET EUROPEEN

(11) **EP 2 605 097 B1**
(45) Date de publication et mention de la délivrance du brevet: **06.04.2016**
(21) Numéro de dépôt: 12194159.5
(22) Date de dépôt: 26.11.2012
(51) Int. Cl.: G05B 19/10

(54) **Factorisation de scénarios**
Faktorzerlegung von Szenarios
Factorization of scenarios

(30) Priorité: 12.12.2011 FR 1161498
(43) Date de publication de la demande: 19.06.2013
(73) Titulaire: Somfy SAS, 74300 Cluses (FR)
(72) Inventeur: Duchene, Isabelle, 74970 MARIGINER (FR)
(74) Mandataire: Verriest, Philippe

(56) Documents cités:
- EP-A1- 2 196 877
- FR-A1- 2 882 843

## Description

L'invention concerne le domaine de la domotique et de l'immotique et a plus particulièrement pour objet un procédé de configuration d'une interface de commande pour la commande d'un système comprenant un ou plusieurs équipements domotiques ou immotiques ainsi que ladite interface de commande.

Le développement récent des ordiphones permet de réaliser une interface de commande nomade adaptée pour mettre en oeuvre des procédés de configuration d'une interface de commande, de manière à configurer facilement, sans câblage ou configuration fastidieuse, des groupes d'équipements électriques domotiques ou immotiques susceptibles d'être pilotés ensemble depuis une unité centrale de commande ou télécommande.

Le développement des applications domotiques permet désormais de piloter un nombre relativement conséquent d'équipements de la maison, notamment des volets, des stores, des fenêtres, des accès, des éclairages et des appareils électroménagers, soit individuellement (groupe constitué d'un seul équipement), soit plusieurs équipements ensemble.

Il est également utile de prévoir des commandes particulières appropriées à toutes sortes de situations de vie ou d'activités des occupants du bâtiment telles que notamment, le réveil, le coucher, le départ en vacances, le départ pour quelques heures, l'ambiance home-cinéma ou la sieste.

Ces commandes particulières, souvent nommées scènes ou scénarios, sont constituées d'un ensemble de commande destinées à des groupes d'équipements et provoquent, lorsqu'elles sont exécutées, le basculement des équipements dans des configurations enregistrées préalablement.

Il est évidemment intéressant de constituer des groupes d'équipements qui correspondent à la situation de ces équipements par rapport au bâtiment, par exemple, l'ensemble des ouvertures ou des volets d'une façade, l'ensemble des équipements électriques d'une pièce, ou les différents équipements prenant part à un scénario.

Une fois ces groupes ou scénarios constitués, il est alors possible d'envoyer un ordre commun aux équipements de chacun des groupes, ou un ordre particulier à chacun des équipements ou des groupes d'équipements liés à un scénario.

Du fait de la possibilité de créer de multiples scénarios et groupes, il est nécessaire de prévoir des repères permettant de bien organiser et nommer ceux-ci.

La taille de l'écran d'un ordiphone est limitée et les informations affichées le sont le plus souvent en dimensions réduites. Ceci nuit à l'interprétation correcte des informations par l'utilisateur.

Dans le cadre de commandes de groupes d'équipements, il est courant de permettre à l'utilisateur de donner des noms aux différents groupes pour les retrouver facilement et, éventuellement, de permettre leur classement. Les solutions de l'art antérieur sont basées par exemple sur des listes défilantes ou des menus déroulants, présentant les noms donnés aux différents groupes.

Le problème lié aux listes ou menus déroutants est le suivant : la mémorisation et la sélection d'un équipement doit être fait uniquement sur des noms (dont le nombre de caractères est parfois limité); la visualisation globale d'une liste complète de l'ensemble des équipements est donc difficilement réalisable à partir d'un unique affichage à l'écran, compte-tenu de la taille réduite des écrans des interfaces de commande, sauf à réduire considérablement la taille des caractères, ce qui les rend illisibles. Ces moyens d'organisation et de visualisation des informations ne sont donc pas adaptés aux interfaces de commande présentant des écrans de petite taille.

Par ailleurs, la situation de vie ou d'activité des utilisateurs implique souvent de définir une multiplicité de scénarios lancés automatiquement, au cours d'un intervalle de temps réduit. L'association de ces scénarios avec un instant de déclenchement sur une échelle de temps peut permettre d'indiquer à l'utilisateur les instants de déclenchement de ces scénarios, mais les repères correspondant à l'association de scénarios avec un instant de l'échelle de temps sont alors concentrés dans un intervalle de temps réduit.

Dès lors, l'affichage indiquant le déclenchement de ces scénarios peut devenir difficile à interpréter par l'utilisateur. Le document FR-A1-2 882 843 décrit un tel état de la technique.

Le but de l'invention est de fournir un procédé d'utilisation d'une interface de commande pour la commande d'équipements domotiques permettant d'améliorer les solutions connues de l'art antérieur et de remédier aux inconvénients précités.

A cet effet, la présente invention a pour objet un procédé de configuration d'une interface de commande pour la commande d'un système comprenant un ou plusieurs équipements domotiques, l'interface de commande comprenant un écran d'information sur lequel est susceptible d'être affichée une échelle de temps représentant une période de temps de durée définie, ledit procédé comportant des étapes consistant à :
(i) : définir une pluralité d'associations, chaque association étant définie entre à un scénario de commande d'un ou de plusieurs équipements domotiques et un instant de déclenchement compris dans la période de temps auquel le scénario doit être déclenché par l'interface de commande,
(ii): réaliser un regroupement d'au moins une partie des associations (A) définies, dont les instants de déclenchement (t) sont compris dans un intervalle de temps de durée définie à l'intérieur de la période de temps,
(iii): positionner un repère collectif sur l'échelle de temps correspondant au regroupement au niveau de l'intervalle de temps.
   Ces dispositions permettent de visualiser sur un même écran l'ensemble des scénarios pouvant être mis en oeuvre au cours de l'intervalle de temps de durée définie compris dans la période de temps.
   Selon un mode de mise en oeuvre, le procédé comprend une étape consistant à
(iv) : afficher sur une partie de l'écran d'information les associations comprises dans le regroupement.

Selon un mode de mise en oeuvre, les associations comprises dans le regroupement sont affichées sous forme d'un ou plusieurs repères singuliers correspondant à une association entre un scénario de fonctionnement d'un ou de plusieurs équipements domotiques et un instant compris dans la période de temps et/ou un ou plusieurs repères collectifs correspondant à un sous-ensemble des associations comprises dans le regroupement.

Selon un mode de mise en oeuvre, les associations comprises dans le regroupement sont affichées sous forme d'une liste, présentant notamment pour chaque association un identifiant du scénario et l'instant de déclenchement. En particulier, la liste peut être une liste chronologique.

Selon un mode de mise en oeuvre du procédé, l'étape (iv) d'affichage est réalisée suite à une action d'un utilisateur au niveau de l'interface de commande.

Selon une mise en oeuvre du procédé, l'étape (ii) réalise un regroupement de l'ensemble des associations parmi la pluralité d'associations définies, dont les instants de déclenchement sont compris dans un intervalle de temps de durée définie à l'intérieur de la période de temps.

Selon une mise en oeuvre du procédé, l'étape (ii) de réalisation d'un regroupement de l'au moins une partie des associations est déclenchée lorsque le nombre d'associations entre des scénarios et des instants de déclenchement compris dans un même intervalle de temps est supérieur ou égal à un nombre prédéfinis d'associations.

Selon une mise en oeuvre du procédé, lorsque le nombre d'association entre des scénarios et des instants de déclenchement compris dans un même intervalle de temps est inférieur au nombre prédéfini d'associations, il comprend une étape de positionnement d'un repère singulier pour une chaque association de l'au moins une partie des associations (A).

Selon une mise en oeuvre du procédé, lors de plusieurs étapes de positionnement d'un repère singulier pour une association parmi la pluralité d'associations définie à l'étape (i) plusieurs repères singuliers sont positionnés au niveau d'un même intervalle de temps de manière décalée les uns par rapport aux autres de manière à éviter un recouvrement.

Selon une mise en oeuvre du procédé, la représentation de l'intervalle de temps est différente selon si le nombre d'association entre des scénarios et des instants de déclenchement compris dans cet intervalle de temps est inférieur au nombre prédéfinis d'associations ou selon si le nombre d'association entre des scénarios et des instants de déclenchement compris dans cet intervalle de temps est supérieur ou égal au nombre prédéfinis d'associations.

Selon une mise en oeuvre du procédé, la représentation de l'intervalle de temps comprend une partie s'étendant sur l'échelle de temps dans l'intervalle de temps de durée définie compris dans la période de temps.

Selon une mise en oeuvre du procédé, le procédé comprend des étapes consistant à :
- définir un instant de lever de soleil dans la période de temps,
- définir un instant de coucher de soleil dans la période de temps.

Selon une mise en oeuvre du procédé, le procédé comprend une étape consistant à ajuster périodiquement la définition des instants de lever et de coucher du soleil dans la période de temps à partir de valeurs telles que :
- des instants de lever et de coucher du soleil au solstice d'été et d'hiver du lieu dans lequel se trouve le système comprenant les équipements domotiques, et/ou
- des coordonnées géographiques du lieu dans lequel se trouve le système comprenant les équipements domotiques, et/ou
- de la ville dans lequel se trouve le système comprenant les équipements domotiques, celle-ci étant sélectionnable à partir d'une liste de villes déterminée.

Selon une mise en oeuvre du procédé, celui-ci comprend des étapes consistant à :
- représenter sur l'échelle de temps un instant de lever de soleil par un repère de lever de soleil,
- représenter sur l'échelle de temps un instant de coucher de soleil par un repère de coucher de soleil.

La présente invention a également pour objet une interface de commande pour la commande d'un système comprenant des équipements domotiques, l'interface de commande comprenant :
- des moyens de définition et/ou de sélection de scénarios de fonctionnement d'un ou de plusieurs équipements domotiques, et
- un écran d'information,
ladite interface de commande étant caractérisée en ce qu'elle comprend des moyens matériels et/ou logiciels pour la mise en oeuvre du procédé tel que décrit précédemment.

Selon un aspect de l'invention, l'écran d'information est un écran tactile comprenant des moyens de commande tactiles, ceux-ci faisant partie des moyens de définition et/ou de sélection de scénarios de commande d'un ou de plusieurs équipements domotiques.

La présente invention a également pour objet une installation comprenant une interface de commande telle que décrite précédemment et un système comprenant des équipements domotiques.

De toute façon, l'invention sera bien comprise à l'aide de la description qui suit, en référence au dessin schématique annexé représentant, à titre d'exemple non limitatif, une interface de commande mettant en oeuvre les étapes d'un procédé selon l'invention.

La figure 1 montre un écran d'information d'une interface de commande selon l'invention avec un premier affichage.

La figure 2 montre un écran d'information d'une interface de commande selon l'invention avec un deuxième affichage.

La figure 3 est une vue agrandie d'une portion de l'écran d'information illustré à la figure 2.

Les figures 4 à 7 illustrent des étapes de visualisation ou de configuration pouvant être réalisée dans un procédé d'utilisation d'une interface de commande selon l'invention.

La figure 8 est une vue agrandie d'une portion de l'écran d'information illustré aux figures 4 à 6.

La figure 9 illustre un procédé d'utilisation selon l'invention.

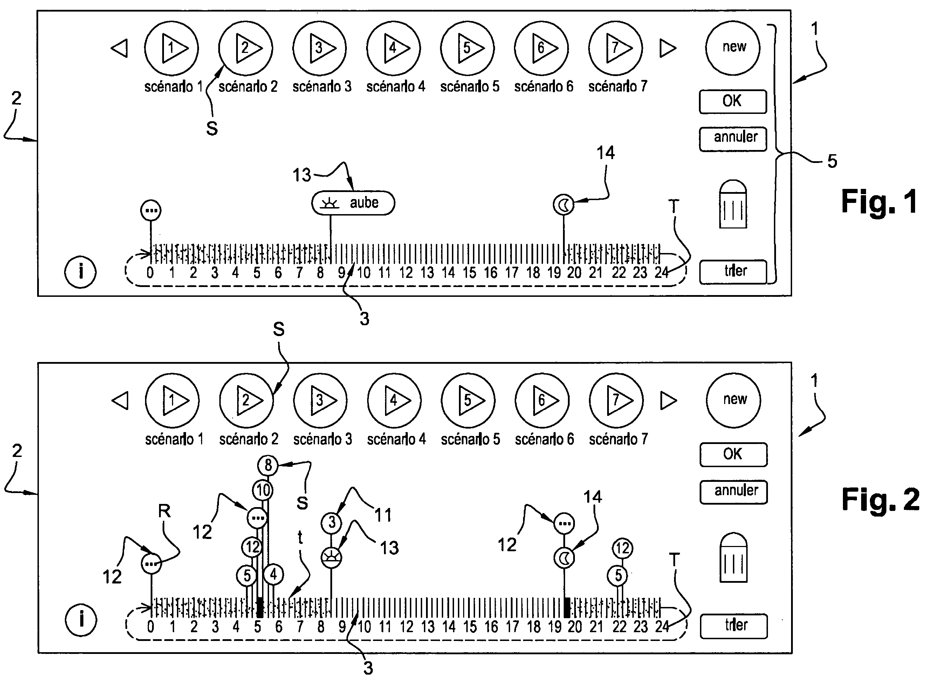

Comme illustré à la figure 1, une interface de commande 1 selon l'invention comprend un écran d'information 2.

Sur le bas de cet écran d'information 2 est représentée une échelle de temps 3 représentant une période de temps T de vingt quatre heures correspondant à la durée d'une journée.

Cette échelle de temps 3 est linéaire et comporte des graduations 4 définissant des intervalles de temps d'une durée ΔT de quinze minutes entre deux graduations 4. L'échelle de temps peut alternativement être variable, c'est-à-dire comporter des graduations à distances variables.

L'interface de commande 1 permet de générer des scénarios S appropriées à toutes sortes de situations de vie ou d'activités des occupants d'un bâtiment telles que notamment, le réveil, le coucher, le départ en vacances, le départ pour quelques heures ou la sieste, ces scénarios S étant liées à des groupes d'équipements.

Le déclenchement de ces scénarios S provoque le basculement des équipements dans des configurations enregistrées préalablement.

Afin d'enregistrer ces configurations et de créer ces scénarios S, l'interface de commande 1 dispose de moyens de génération 5 de scénarios S.

Ces moyens de génération 5 de scénarios S sont visibles sur la droite de l'écran d'information 2.

Une fois les scénarios S créés, au moins une association A (S, t) peut être définie entre un scénario S de fonctionnement d'un ou de plusieurs équipements domotiques et un instant t compris dans un intervalle de temps ΔT de la période de temps T de l'échelle de temps 3.

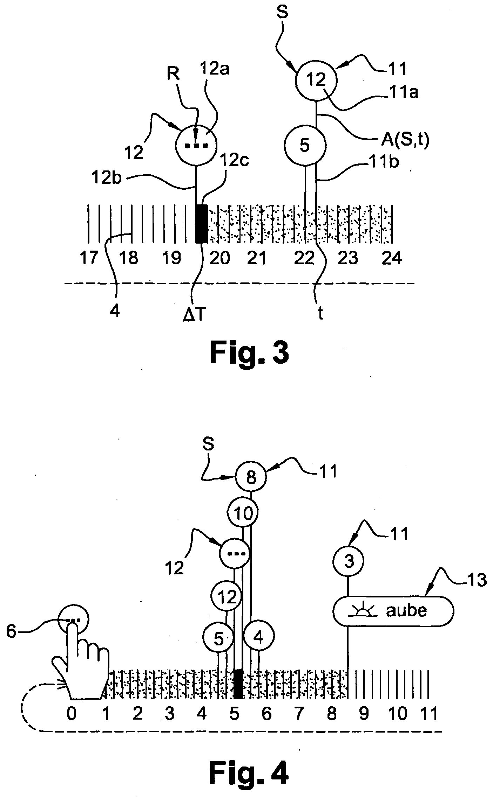

Dans le cas où les associations A existantes entre des scénarios et des instants t étant répartis dans différents intervalles de temps ΔT sur la période de temps T, alors chaque association A peut être représentée sur l'échelle de temps 3 sous la forme d'un repère singulier 11 d'un premier type placé au dessus de l'échelle de temps 3, comme cela est visible sur les figures 2 et 3.

Dans l'exemple présenté, le repère singulier 11 comprend une première partie 11a dite d'identification formée par un cercle dans lequel est inscrit un symbole, par exemple un numéro correspondant au scénario S créé par l'utilisateur, permettant à celui-ci d'identifier facilement le scénario S en question.

Le repère singulier 11 comprend également une deuxième partie 11 b dite de concordance formée par un trait vertical s'étendant depuis la partie d'identification 11a du repère 11 jusqu'à une graduation 4 de l'échelle de temps 3, permettant à l'utilisateur de repérer sur l'échelle de temps 3 l'instant t de déclenchement du scénario S identifié par la partie d'identification 11a.

Comme illustré à la figure 2, la définition de l'association A entre un scénario S et un instant de la période de temps T peut conduire au placement de plusieurs repères singuliers 11 de premier type dans un intervalle de temps réduit de la période de temps T.

Sur la figure 2, plusieurs de ces repères 11 sont placés entre 4 et 6 heures du matin.

Les parties d'identification 11 a des repères 11 sont disposées les unes au dessus des autres et les deuxièmes parties 11b des repères 11 présentent donc une longueur variable de manière à pouvoir représenter les premières parties 11a de manière décalée, notamment sans recouvrements et de manière à ne pas réduire la lisibilité de l'identifiant d'un scénario S.

Néanmoins, l'espace disponible sur l'écran d'information 2 permettant un tel affichage des repères 11 est limité.

Ainsi, pour permettre de préserver la lisibilité de l'écran, l'interface de commande 1 définie un regroupement R (A € ΔT) d'une partie d'une pluralité d'associations A (S, t) dont les instants t de déclenchement sont compris dans un intervalle de temps ΔT de durée définie compris dans la période de temps T.

Dans l'exemple présenté, le regroupement R comprend l'ensemble des associations A parmi la pluralité d'associations définies, dont les instants de déclenchement t sont compris dans un intervalle de temps ΔT de durée définie à l'intérieur de la période de temps T.

Dans le mode de réalisation présenté, cet intervalle de temps ΔT de durée définie correspond à la durée entre deux graduations 4 de l'échelle de temps 3, soit à une durée égale à quinze minutes.

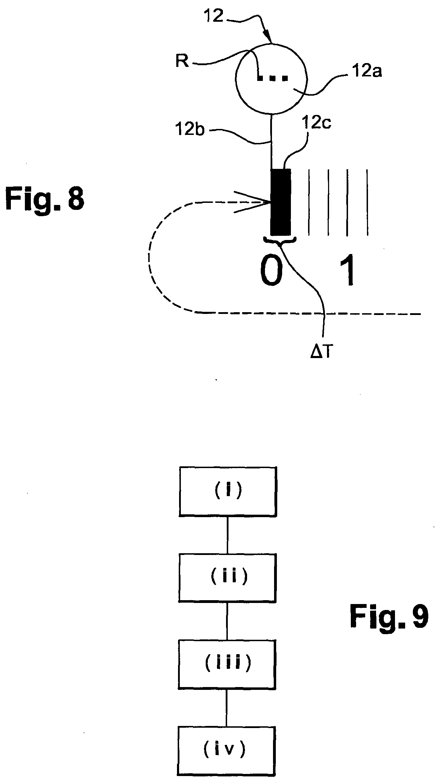

Le regroupement R est représentée dans une troisième étape (iv) du procédé sur l'échelle de temps 3 sous la forme d'un repère collectif 12 d'un deuxième type placé au dessus de l'échelle de temps 3 et représenté plus particulièrement aux figures 3 et 8.

Le repère collectif 12 comprend une première partie 12a dite d'identification formée par un cercle dans lequel est inscrit un symbole permettant à l'utilisateur d'identifier facilement le regroupement de la pluralité d'associations.

Dans l'exemple présenté, ce symbole est formé par trois points consécutifs placés horizontalement.

Bien entendu, la présente invention n'est pas limitée à ce symbole qui peut être remplacé par tout autre moyen permettant de différencier le repère collectif 12 d'un repère singulier 11.

Le regroupement peut être réalisé manuellement, par un utilisateur, ou automatiquement, par exemple lorsque le nombre d'associations sur un intervalle de temps ΔT dépasse un nombre entier prédéfini. Inversement, lorsque le nombre d'associations d'un regroupement devient inférieur à un nombre prédéfinis, le repère collectif est remplacé par les repères singuliers propres à chaque association sur l'intervalle de temps ΔT.

Comme illustré à la figure 8, le repère collectif 12 comprend également d'une part une deuxième partie 12b dite de concordance formée par un trait vertical s'étendant depuis la partie d'identification 12a du repère 12 jusqu'à une graduation 4 de l'échelle de temps 3, et comprend également d'autre part une troisième partie 12c dite de recouvrement formée par une surface occupant l'intervalle de temps ΔT entre deux graduations 4 de l'échelle de temps 3 suivant la graduation 4 sur laquelle s'étend la deuxième partie de concordance 12b, et permettant à l'utilisateur de repérer sur l'échelle de temps 3, l'intervalle de temps ΔT au cours duquel se déclenchent les scénarios S regroupés sous le repère collectif 12. Comme pour les repères singuliers 11, la longueur du trait vertical est variable, de manière à décaler le cas échéant le repère collectif 12 par rapport à d'autres repères collectifs ou singuliers.

Dans l'exemple présenté, l'écran d'information 2 est du type tactile et comprend donc des moyens de commande tactiles 6 dont font partie les moyens de génération 5 de scénarios S de fonctionnement d'un ou de plusieurs équipements domotiques.

Les figures 4 à 7 montrent différents affichages de l'écran d'information 2 suite à l'appui sur une zone de l'écran d'information 2 dans lequel apparait la première partie 12a d'un repère collectif 12.

Les moyens de commande tactiles 6 permettent d'associer une fonction à l'appui sur cette zone de l'écran d'information 2.

Cette action de l'utilisateur, est illustrée par une main à la figure 4.

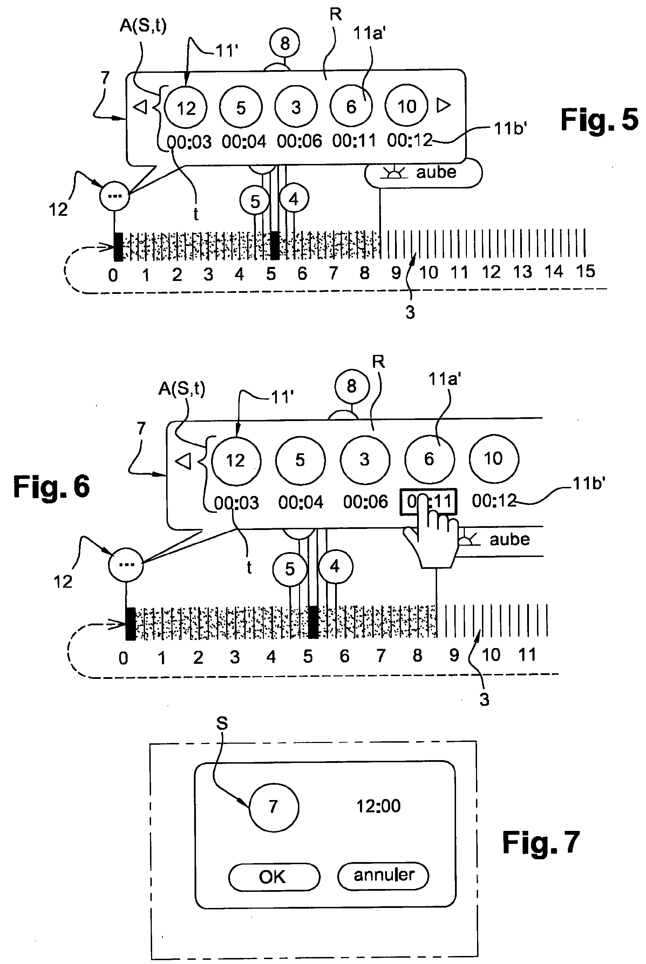

Cela conduit à une quatrième étape (iv) du procédé selon l'invention selon laquelle suite à une interaction avec l'utilisateur, l'interface de commande représente l'au moins une pluralité d'associations du regroupement par plusieurs repères singuliers de premier type montrés à la figure 5.

Ces quatre étapes (i), (ii), (iii) et (iv) sont illustrées à la figure 9.

Cette représentation pourrait cependant également inclure des repères collectifs 12.

Cette représentation sur l'écran d'information 2 se fait sous la forme d'une bulle 7 reliée à la première partie 12a du repère collectif 12 sur laquelle l'utilisateur a appuyé.

Dans cette bulle 7, des repères singuliers 11' d'un deuxième type apparaissent et sont réparties chronologiquement sur la largeur de la bulle 7.

Ces repères singuliers 11' sont une variante dans leur forme des repères singuliers 11 et diffèrent de ceux-ci uniquement en ce qu'ils ne comportent pas de deuxième partie 11 b formée par un trait vertical.

Ces repères singuliers 11' auraient cependant pu être identiques aux repères singuliers 11 et être placés sur une nouvelle échelle de temps représentée dans la bulle 7.

Les premières parties 11a' de ces repères 11' sont identiques aux premières parties 11a des repères de premier type 11 formées par un cercle dans lequel est inscrit le numéro correspondant à un scénario S.

La deuxième partie 11 b est quant à elle remplacée par une deuxième partie 11 b' indiquant directement l'instant auquel est associé un scénario S.

Cette deuxième partie 11 b' apparait directement sous la première partie 11 a' de chaque repère 11' de la bulle 7.

Comme mentionné ci-dessus ces repères singuliers 11' sont répartis de manière chronologique selon l'instant auquel est associé un scénario S.

Cet instant a une valeur comprise entre les deux graduations 4 de l'échelle de temps 3 entre lesquelles s'étend la troisième partie 12c du repère de deuxième type 12 sur lequel l'utilisateur a appuyé.

Dans l'exemple présenté, cet instant est donc compris dans une durée n'excédant pas quinze minutes.

Comme illustré aux figures 6 et 7, l'affichage de la bulle 7 permet d'afficher, de visualiser et/ou de modifier l'ensemble des associations du regroupement, entre les scénarios S et leurs instants de déclenchement. Notamment, une association peut être modifiée, en particulier en modifiant l'instant de déclenchement dans l'intervalle de temps ΔT ou bien hors de cet intervalle de temps, auquel cas l'association est alors exclue de fait du regroupement..

C'est ainsi que sur les figures 6 et 7, le scénario 6 peut être supprimé de l'ensemble d'associations formant le regroupement R et le scénario 7 peut être rajouté à ce regroupement R en modifiant l'instant de déclenchement à une valeur comprise dans l'intervalle de temps ΔT.

Dans un mode de mise en oeuvre du procédé, celui-ci comprend des étapes consistant à définir un instant de lever de soleil dans la période de temps, et un instant de coucher de soleil dans la période de temps T.

Ces définitions sont réalisées périodiquement, c'est-à-dire prédéfinies pour chaque jour d'une année calendaire, à partir de valeurs telles que :
- des instants de lever et de coucher du soleil au solstice d'été et d'hiver du lieu dans lequel se trouve le système comprenant les équipements domotiques, et/ou
- des coordonnées géographiques du lieu dans lequel se trouve le système comprenant les équipements domotiques, et/ou
- de la ville dans lequel se trouve le système comprenant les équipements domotiques, celle-ci étant sélectionnable à partir d'une liste de villes d'une base de données.

Pour une échelle de temps T correspondant à un jour donné, un repère de troisième type 13 correspondant à l'instant de lever de soleil et un repère de quatrième type 14 correspondant à l'instant de coucher de soleil sont positionnés à l'instant du lever du soleil et à l'instant du coucher du soleil prédéfinis.

Le repère de troisième type 13 diffère uniquement d'un repère singulier 11 en ce que le numéro correspondant au scénario S créé par l'utilisateur est remplacé par un pictogramme représentant un soleil et éventuellement complété par du texte.

De même, le repère de quatrième type 14 diffère uniquement d'un repère singulier 11 en ce que le numéro correspondant au scénario S créé par l'utilisateur est remplacé par un pictogramme représentant un croissant de lune.

Ces repères de troisième et de quatrième type sont positionnés automatiquement à l'instant prédéfini correspondant au jour calendaire auquel est associée l'échelle de temps.

Bien entendu, la présente invention n'est pas limitée à ce type de pictogramme mais comprend au contraire tous les moyens de différenciation avec un repère singulier 11 et un repère collectif 12.

La présente invention a également pur objet l'interface de commande 1 comprenant :
- les moyens de génération 5 de scénarios S de fonctionnement d'un ou de plusieurs équipements domotiques, et
- l'écran d'information 2.

De plus, l'interface de commande 1 comprend des moyens matériels et/ou logiciels pour la mise en oeuvre du procédé d'utilisation tel que décrit précédemment.

Comme mentionné ci-dessus, ces moyens matériels peuvent comprendre un écran tactile qui a l'avantage de pouvoir s'affranchir de moyens de commande déportés de l'écran d'information 2.

La présente invention concerne également une installation comprenant une interface de commande 1 telles que décrites précédemment et un système comprenant des équipements domotiques, tels que des actionneurs de stores, des actionneurs d'éclairage, des actionneurs de verrouillage susceptibles d'être pilotés ensemble depuis une unité centrale de commande ou télécommande.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

## Revendications

1. Procédé de configuration d'une interface de commande (1) pour la commande d'un système comprenant un ou plusieurs équipements domotiques, l'interface de commande (1) comprenant un écran d'information (2) sur lequel est susceptible d'être affichée une échelle de temps (3) représentant une période de temps (T) de durée définie, ledit procédé comportant des étapes consistant à :
(i) : définir une pluralité d'associations (A), chaque association étant définie entre un scénario (S) de commande d'un ou de plusieurs équipements domotiques et un instant de déclenchement (t) compris dans la période de temps (T) auquel le scénario doit être déclenché par l'interface de commande,
(ii) : réaliser un regroupement (R) d'au moins une partie des associations (A) définies dont les instants de déclenchement (t) sont compris dans un intervalle de temps (ΔT) de durée définie à l'intérieur de la période de temps (T),
(iii): positionner un repère collectif (12) sur l'échelle de temps (3) correspondant au regroupement (R) au niveau de l'intervalle de temps (ΔT).

2. Procédé selon la revendication 1, comprenant une étape consistant à
(iv) : afficher sur une partie de l'écran d'information (2) les associations (A) comprises dans le regroupement (R).

3. Procédé selon la revendication 2, dans lequel les associations (A) comprises dans le regroupement sont affichées sous forme d'un ou plusieurs repères singuliers (11) correspondant à une association entre un scénario (S) de fonctionnement d'un ou de plusieurs équipements domotiques et un instant (t) compris dans la période de temps (T) et/ou un ou plusieurs repères collectifs (12) correspondant à un sous-ensemble des associations (A) comprises dans le regroupement.

4. Procédé selon la revendication 2, dans lequel les associations (A) comprises dans le regroupement (R) sont affichées sous forme d'une liste, présentant notamment pour chaque association un identifiant du scénario et l'instant de déclenchement.

5. Procédé selon l'une des revendications 2 à 4, dans lequel l'étape (iv) d'affichage est réalisée suite à une action d'un utilisateur au niveau de l'interface de commande.

6. Procédé selon l'une des revendications précédentes, dans lequel l'étape (ii) réalise un regroupement (R) de l'ensemble des associations (A) parmi la pluralité d'associations définies, dont les instants de déclenchement (t) sont compris dans un intervalle de temps (ΔT) de durée définie à l'intérieur de la période de temps (T).

7. Procédé selon l'une des revendications précédentes, dans lequel l'étape (ii) de réalisation d'un regroupement de l'au moins une partie des associations (A) est déclenchée lorsque le nombre d'associations entre des scénarios et des instants de déclenchement compris dans un même intervalle de temps (ΔT) est supérieur ou égal à un nombre prédéfinis d'associations.

8. Procédé selon la revendication 7, dans lequel lorsque le nombre d'association entre des scénarios et des instants de déclenchement compris dans un même intervalle de temps (ΔT) est inférieur au nombre prédéfini d'associations, il comprend une étape de positionnement d'un repère singulier pour chaque association de l'au moins une partie des associations (A).

9. Procédé selon la revendication 8, dans lequel lors de plusieurs étapes de positionnement d'un repère singulier pour une association parmi la pluralité d'associations définie à l'étape (i) plusieurs repères singuliers sont positionnés au niveau d'un même intervalle de temps (ΔT) de manière décalée les uns par rapport aux autres de manière à éviter un recouvrement.

10. Procédé selon l'une des revendications 8 ou 9, dans lequel la représentation de l'intervalle de temps (ΔT) est différente selon si le nombre d'association entre des scénarios et des instants de déclenchement compris dans cet intervalle de temps (ΔT) est inférieur au nombre prédéfinis d'associations ou selon si le nombre d'association entre des scénarios et des instants de déclenchement compris dans cet intervalle de temps (ΔT) est supérieur ou égal au nombre prédéfinis d'associations.

11. Procédé selon la revendication 10, dans lequel la représentation de l'intervalle de temps (ΔT) comprend une partie (12c) s'étendant sur l'échelle de temps (3) dans l'intervalle de temps (ΔT) de durée définie compris dans la période de temps (T).

12. Procédé selon l'une des revendications précédentes, comprenant des étapes consistant à :
- définir un instant de lever de soleil dans la période de temps (T),
- définir un instant de coucher de soleil dans la période de temps (T).

13. Procédé selon la revendication 12, comportant une étape consistant à ajuster périodiquement la définition des instants de lever et de coucher du soleil dans la période de temps (T) à partir de valeurs telles que :
- des instants de lever et de coucher du soleil au solstice d'été et d'hiver du lieu dans lequel se trouve le système comprenant les équipements domotiques, et/ou
- des coordonnées géographiques du lieu dans lequel se trouve le système comprenant les équipements domotiques, et/ou
- de la ville dans lequel se trouve le système comprenant les équipements domotiques, celle-ci étant sélectionnable à partir d'une liste de villes déterminée.

14. Interface de commande (1) pour la commande d'un système comprenant des équipements domotiques, l'interface de commande (1) comprenant :
- des moyens de définition et/ou de sélection (5) de scénarios (S) de fonctionnement d'un ou de plusieurs équipements domotiques, et
- un écran d'information (2),
ladite interface de commande (1) étant **caractérisée en ce qu'**elle comprend des moyens matériels et/ou logiciels pour la mise en oeuvre du procédé de commande selon l'une des revendications précédentes.

15. Interface de commande (1) selon la revendication 14, comprenant une base de données pour la mise en oeuvre du procédé selon la revendication 11 stockant des données relatives :
- aux instants de lever et de coucher du soleil au solstice d'été et d'hiver du lieu dans lequel se trouve le système comprenant les équipements domotiques, et/ou
- aux coordonnées géographiques du lieu dans lequel se trouve le système comprenant les équipements domotiques, et/ou
- à la ville dans lequel se trouve le système comprenant les équipements domotiques, celle-ci étant sélectionnable à partir d'une liste de villes déterminée.

16. Interface de commande selon l'une des revendications 14 ou 15, dans laquelle l'écran d'information (2) est un écran tactile comprenant des moyens de commande tactiles (6), ceux-ci faisant partie des moyens de définition et/ou de sélection (5) de scénarios (S) de fonctionnement d'un ou de plusieurs équipements domotiques.

17. Installation comprenant une interface de commande (1) selon l'une des revendications 14 à 16 et un système comprenant des équipements domotiques.

## Patentansprüche

1. Verfahren zur Konfiguration einer Steuerschnittstelle (1) zur Steuerung eines Systems, das eine oder mehrere Hausautomationseinrichtungen umfasst, wobei die Steuerschnittstelle (1) einen Informationsbildschirm (2) umfasst, auf dem eine Zeitskala (3) angezeigt werden kann, die einen Zeitraum (T) von definierter Dauer darstellt, wobei das besagte Verfahren Schritte beinhaltet, die in folgendem bestehen:
(i): Definieren einer Vielzahl von Assoziationen (A), wobei jede Assoziation zwischen einem Szenario (S) zur Steuerung einer oder mehrerer Hausautomationseinrichtungen und einem Auslösezeitpunkt (t), der in dem Zeitraum (T) umfasst ist und zu dem das Szenario von der Steuerschnittstelle ausgelöst werden muss, definiert wird,
(ii): Durchführen einer Umgruppierung (R) mindestens eines Teils der definierten Assoziationen (A), deren Auslösezeitpunkte (t) in einem Zeitintervall (ΔT) von definierter Dauer innerhalb des Zeitraums (T) umfasst sind,
(iii): Positionieren einer gemeinschaftlichen Markierung (12) auf der Zeitskala (3), die der Umgruppierung (R) in Bezug auf das Zeitintervall (ΔT) entspricht.

2. Verfahren nach Anspruch 1, das einen Schritt umfasst, der in folgendem besteht:
(iv): Anzeigen der Assoziationen (A), die in der Umgruppierung (R) umfasst sind, auf einem Teil des Informationsbildschirms (2).

3. Verfahren nach Anspruch 2, wobei die Assoziationen (A), die in der Umgruppierung umfasst sind, in der Form einer oder mehrerer einzigartiger Markierungen (11), die einer Assoziation zwischen einem Szenario (S) zum Betrieb einer oder mehrerer Hausautomationseinrichtungen und einem Zeitpunkt (t), der in dem Zeitraum (T) umfasst ist, entsprechen, und/oder einer oder mehrerer gemeinschaftlicher Markierungen (12), die einer Teilmenge von Assoziationen (A), die in der Umgruppierung umfasst sind, entsprechen, angezeigt werden.

4. Verfahren nach Anspruch 2, wobei die Assoziationen (A), die in der Umgruppierung (R) umfasst sind, in der Form einer Liste angezeigt werden, die insbesondere eine Kennung des Szenarios und den Auslösezeitpunkt für jede Assoziation präsentiert.

5. Verfahren nach einem der Ansprüche 2 bis 4, wobei der Anzeigeschritt (iv) nach einer Aktion eines Benutzers in Bezug auf die Steuerschnittstelle durchgeführt wird.

6. Verfahren nach einem der vorhergehenden Ansprüche, wobei der Schritt (ii) eine Umgruppierung (R) der Gesamtheit der Assoziationen (A) aus der Vielzahl von definierten Assoziationen durchführt, deren Auslösezeitpunkte (t) in einem Zeitintervall (ΔT) von definierter Dauer innerhalb des Zeitraums (T) umfasst sind.

7. Verfahren nach einem der vorhergehenden Ansprüche, wobei der Schritt (ii) des Durchführens einer Umgruppierung mindestens eines Teils der Assoziationen (A) ausgelöst wird, wenn die Anzahl von Assoziationen zwischen Szenarios und Auslösezeitpunkten, die in demselben Zeitintervall (ΔT) umfasst sind, größer gleich einer vordefinierten Anzahl von Assoziationen ist.

8. Verfahren nach Anspruch 7, wobei es, wenn die Anzahl von Assoziationen zwischen Szenarios und Auslösezeitpunkten, die in demselben Zeitintervall (ΔT) umfasst sind, kleiner der vordefinierten Anzahl von Assoziationen ist, einen Schritt des Positionierens einer einzigartigen Markierung für jede Assoziation mindestens eines Teils von Assoziationen (A) umfasst.

9. Verfahren nach Anspruch 8, wobei während mehrerer Schritte des Positionierens einer einzigartigen Markierung für eine Assoziation aus der Vielzahl von im Schritt (i) definierten Assoziationen mehrere einzigartige Markierungen in Bezug auf dasselbe Zeitintervall (ΔT) zueinander versetzt positioniert werden, um eine Überlappung zu vermeiden.

10. Verfahren nach einem der Ansprüche 8 oder 9, wobei die Darstellung des Zeitintervalls (ΔT) in Abhängigkeit davon unterschiedlich ist, ob die Anzahl von Assoziationen zwischen Szenarios und Auslösezeitpunkten, die in diesem Zeitintervall (ΔT) umfasst sind, kleiner als die vordefinierte Anzahl von Assoziationen ist oder ob die Anzahl von Assoziationen zwischen Szenarios und Auslösezeitpunkten, die in diesem Zeitintervall (ΔT) umfasst sind, größer gleich der vordefinierten Anzahl von Assoziationen ist.

11. Verfahren nach Anspruch 10, wobei die Darstellung des Zeitintervalls (ΔT) einen Teil (12c) umfasst, der sich auf der Zeitskala (3) in dem Zeitintervall (ΔT) von definierter Dauer, das in dem Zeitraum (T) umfasst ist, erstreckt.

12. Verfahren nach einem der vorhergehenden Ansprüche, das Schritte umfasst, die in folgendem bestehen:
- Definieren eines Sonnenaufgangszeitpunkts in dem Zeitraum (T),
- Definieren eines Sonnenuntergangszeitpunkts in dem Zeitraum (T).

13. Verfahren nach Anspruch 12, das einen Schritt umfasst, der in dem periodischen Anpassen der Definition des Sonnenaufgangszeitpunkts und des Sonnenuntergangszeitpunkts in dem Zeitraum (T) anhand von Werten wie den folgenden besteht:
- Sonnenaufgangszeitpunkt und Sonnenuntergangszeitpunkt zur Sommersonnenwende und Wintersonnenwende an dem Ort, an dem sich das System befindet, das die Hausautomationseinrichtungen umfasst, und/oder
- geografischen Koordinaten des Orts, an dem sich das System befindet, das die Hausautomationseinrichtungen umfasst, und/oder
- die Stadt, an dem sich das System befindet, das die Hausautomationseinrichtungen umfasst, wobei diese aus einer bestimmten Liste von Städten auswählbar ist.

14. Steuerschnittstelle (1) zur Steuerung eines Systems, das Hausautomationseinrichtungen umfasst, wobei die Steuerschnittstelle (1) Folgendes umfasst:
- Mittel zur Definition und/oder Auswahl (5) von Szenarios (S) zum Betrieb einer oder mehrerer Hausautomationseinrichtungen und
- einen Informationsbildschirm (2),
wobei die besagte Steuerschnittstelle (1) **dadurch gekennzeichnet ist, dass** sie Hardware- und/oder Softwaremittel zur Umsetzung des Steuerverfahrens nach einem der vorhergehenden Ansprüche umfasst.

15. Steuerschnittstelle (1) nach Anspruch 14, die eine Datenbank zur Umsetzung des Verfahrens nach Anspruch 11 umfasst, die Daten speichert, die sich auf Folgendes beziehen:
- den Sonnenaufgangszeitpunkt und den Sonnenuntergangszeitpunkt zur Sommersonnenwende und Wintersonnenwende an dem Ort, an dem sich das System befindet, das die Hausautomationseinrichtungen umfasst, und/oder
- die geografischen Koordinaten des Orts, an dem sich das System befindet, das die Hausautomationseinrichtungen umfasst, und/oder
- die Stadt, an dem sich das System befindet, das die Hausautomationseinrichtungen umfasst, wobei diese aus einer bestimmten Liste von Städten auswählbar ist.

16. Steuerschnittstelle nach einem der Ansprüche 14 oder 15, wobei der Informationsbildschirm (2) ein Berührungsbildschirm ist, der Berührungssteuermittel (6) umfasst, wobei diese Teil von Mitteln zur Definition und/oder Auswahl (5) von Szenarios (S) zum Betrieb einer oder mehrerer Hausautomationseinrichtungen sind.

17. Anlage, die eine Steuerschnittstelle (1) nach einem der Ansprüche 14 bis 16 und ein System, das Hausautomationseinrichtungen umfasst, umfasst.

## Claims

1. A configuration method of a control interface (1) for controlling a system comprising one or more home automation equipment(s), the control interface (1) comprising an information screen (2) on which a time scale (3), representing a time period (T) of defined duration, is able to be displayed, said method including steps of :
(i) : defining a plurality of associations (A), each association being defined between a control scenario (S) of one or more home automation equipment(s) and a triggering instant (t) comprised in the time period (T) at which the scenario is to be triggered by the control interface,
(ii) : carrying out a grouping (R) at least a portion of the defined associations (A) whose triggering instants (t) are comprised in a time interval (ΔT) of a defined duration within the time period (T),
(iii) : positioning a collective reference (12) on the time scale (3) corresponding to the grouping (R) at the time interval (TA).

2. The method according to claim 1 comprising a step of :
(iv) : displaying, on a portion of the information screen (2), the associations (A) included in the grouping (R).

3. The method according to claim 2 wherein the associations (A) comprised in the grouping, are displayed as one or more singular reference(s) (11) corresponding to an association between an operation scenario (S) of one or more home automation equipment(s) and an instant (t) comprised in the time period (T) and/or one or more collective reference(s) (12) corresponding to a sub-assembly of the associations (A) comprised in the grouping.

4. The method according to claim 2 wherein the associations (A) comprised in the grouping (R) are displayed as a list, having, in particular for each association, an identifier of the scenario and the triggering instant.

5. The method according to any of claims 2 to 4 wherein the display step (iv) is carried out subsequent to an action of a user at the control interface.

6. The method according to any of the preceding claims wherein the step (ii) carries out a grouping (R) of the assembly of the associations (A) among the plurality of defined associations, whose triggering instants (t) are comprised in a time interval (ΔT) of a defined duration within the time period (T).

7. The method according to any of the preceding claims wherein the grouping step (ii) of at least a portion of the associations (A) is triggered when the number of associations between scenarios and triggering instants comprised in a same time interval (ΔT) is greater than or equal to a predefined number of associations.

8. The method according to claim 7 wherein, when the number of associations between scenarios and triggering instants comprised in a same time interval (ΔT) is less than the predefined number of associations, it comprises a positioning step of a singular reference for each association of the least a portion of the associations (A).

9. The method according to claim 8 wherein, during several positioning steps of a singular reference for an association among the plurality of associations defined in the step (i), several singular references are positioned at a same time interval (ΔT) in an offset manner from one another so as to avoid an overlapping.

10. The method according to any of claims 8 or 9, wherein the representation of the time interval (ΔT) is different depending on whether the number of associations between scenarios and triggering instants comprised in this time interval (ΔT) is less than the predefined number of associations or depending on whether the number of associations between scenarios and triggering instants comprised in this time interval (ΔT) is greater than or equal to the predefined number of associations.

11. The method according to claim 10 wherein the representation of the time interval (ΔT) comprises a portion (12c) extending on the time scale (3) in the time interval (ΔT) of a defined duration comprised in the time period (T).

12. The method according to any the preceding claims comprising steps of :
- defining a moment of sunrise in the time period (T),
- defining a moment of sunset in the time period (T),

13. The method according to claim 12, including a step of periodically adjusting the definition of the moments of sunrise and sunset in the time period (T) from values such as of :
- moments of sunrise and sunset at the summer and winter solstices of the place wherein the system comprising the home automation equipments is located, and/or
- geographic coordinates of the place wherein the system comprising the home automation equipments is located, and/or
- the city wherein the system comprising the home automation equipments is located, the latter being selectable from a list of determined cities.

14. A control interface (1) for controlling a system comprising home automation equipments, the control interface (1) comprising :
- means (5) for defining and/or selecting operation scenarios (S) of one or more home automation equipment(s), and
- an information screen (2),
said control interface (1) being **characterized in that** it comprises hardware and/or software means for implementing the control method according to any of the preceding claims.

15. The control interface (1) according to claim 14, comprising a database for implementing the method according to claim 11 storing data related to :
- the moments of sunrise and sunset at the summer and winter solstices of the place wherein the system comprising the home automation equipments is located, and/or
- the geographic coordinates of the place wherein the system comprising the home automation equipments is located, and/or
- the city wherein the system comprising the home automation equipments is located, the latter being selectable from a list of determined cities.

16. The control interface according to any of claims 14 or 15 wherein the information screen (2) is a touch screen comprising touch control means (6), these being part of the means (5) for defining and/or selecting operation scenarios (S) of one or more home automation equipment(s).

17. An installation comprising a control interface (1) according to any of claims 14 to 16 and a system comprising home automation equipments.
